# EUROPÄISCHE PATENTANMELDUNG

(11) **EP 1 703 059 A1**
(43) Veröffentlichungstag der Anmeldung: **20.09.2006**
(21) Anmeldenummer: 06003866.8
(22) Anmeldetag: 25.02.2006
(51) Int. Cl.: E05F 5/02

(54) **Anschlagpuffer für eine Frontklappe eines Kraftfahrzeugs**

(30) Priorität: 19.03.2005 DE 102005012773
(71) Anmelder: Bayerische Motoren Werke Aktiengesellschaft, 80809 München (DE)
(72) Erfinder: Köstler, Ulrich, 85241 Hebertshausen (DE); Fichtinger, Gerhard, 85630 Grasbrunn (DE); Widl, Walter, 81249 München (DE)

(57) **Zusammenfassung**

Es ist ein Anschlagpuffer für eine Frontklappe bekannt, der bis zu einer definierten Belastung als konventioneller Anschlagpuffer fungiert. Bei Belastungen oberhalb der definierten Grenzlast, wie sie insbesondere beim Aufprall eines Fußgängers oder Radfahrers auf die Frontklappe entstehen, deformiert sich der Anschlagpuffer in vertikaler Richtung plastisch, sodass auch im Bereich des Anschlagpuffers sich die Frontklappe ausreichend deformieren kann, um den Aufprall des Fußgängers oder Radfahrers auf biomechanisch verträgliche Weise zu verzögern. Aufgabe der Erfindung ist es, einen Anschlagpuffer für eine Frontklappe zu schaffen, der eine ausreichende Deformation der Frontklappe bei einem Aufprall eines Fußgängers oder Radfahrers auch im Bereich des Anschlagpuffers gewährleistet.

Erfindungsgemäß weist ein Anschlagpuffer (1) für eine Frontklappe eines Kraftfahrzeugs zumindest ein Pufferelement (2) und eine Aufnahme (4) auf, über die das Pufferelement (2) entweder an der Frontklappe oder an einem der geschlossenen Frontklappe gegenüberliegenden Abschnitt der Karosserie des Kraftfahrzeugs anbringbar ist. Die Aufnahme (4) ist so gestaltet, dass sie bei Belastungen des Pufferelements (2), die größer einer Grenzlast sind, zumindest teilweise zerbricht, sodass sich das Pufferelement (2) relativ zur Frontklappe oder zum der geschlossenen Frontklappe gegenüberliegenden Abschnitt der Karosserie verlagern kann und nicht mehr als Anschlag für die geschlossene Frontklappe dient.

## Beschreibung

Die Erfindung betrifft einen Anschlagpuffer für eine Frontklappe eines Kraftfahrzeugs nach dem Oberbegriff des Patentanspruchs 1.

Um bei einer Kollision eines Fußgängers oder Radfahrers mit einem Kraftfahrzeug das Ausmaß von Verletzungen insbesondere im Brust- und Kopfbereich zu minimieren, ist es allgemein bekannt, einen relativ großen Mindestabstand zwischen einer Frontklappe und einer steifen Unterstruktur des Fahrzeugs (Motor, Federbeinaufnahmen, etc.) vorzusehen, sodass ein ausreichender Deformationsweg der Frontklappe zur Verfügung steht, um den Aufprall des Fußgängers oder Radfahrers auf ein biomechanisch verträgliches Maß zu verzögern.

Wenn der dazu benötigte Mindestabstand zwischen geschlossener Frontklappe und der steifen Unterstruktur aus bauraumtechnischen Gründen nicht zur Verfügung steht, kann die Frontklappe aktiv zumindest im hinteren Bereich angehoben werden, um den Mindestabstand zu erzeugen, wenn ein Zusammenstoß des Fahrzeugs mit einem Fußgänger oder Radfahrer detektiert wird.

Bei manchen Fahrzeugen steht der erforderliche Mindestabstand zwischen geschlossener Frontklappe und der steifen Unterstruktur zur Verfügung, ohne dass die Frontklappe aktiv angehoben werden muss. Kritisch bleibt hierbei allerdings der Bereich der Frontklappe nahe bei den Scharnieren, mit denen die Frontklappe an die Karosserie angelenkt ist, da die Frontklappe in diesem Bereich nicht ausreichend deformierbar ist. Zur Vermeidung dieses kritischen Bereichs ist es aus der JP 2000-108842 A bekannt, zwischen einem Scharnier und einer Frontklappe und zwischen dem Scharnier und der Karosserie jeweils ein energieabsorbierendes Element anzubringen.

Häufig sind an der Frontklappe oder an der darunterliegenden Karosserie Anschlagpuffer angeordnet, die beim Schließen der Frontklappe als Anschlag dienen und so eine definierte Schließposition der Frontklappe sicherstellen. Aus der DE 201 01 876 U1 ist ein elastischer Anschlagpuffer zum Abfangen einer in Axialrichtung des Anschlagpuffers wirkenden Kraftkomponente bekannt. Der Anschlagpuffer ist mit Befestigungsmitteln zum Eindrehen in ein Loch oder Gewinde eines Blechbauteiles ausgerüstet. Im Bereich derartiger Anschlagpuffer steht bei geschlossener Frontklappe ebenfalls nicht der erforderliche Mindestabstand zwischen Frontklappe und der steifen Unterstruktur zur Verfügung.

Aus der EP 1 488 987 A1 ist ein Anschlagpuffer für eine Frontklappe bekannt, der bis zu einer definierten Belastung als konventioneller Anschlagpuffer fungiert. Bei Belastungen oberhalb der definierten Grenzlast, wie sie insbesondere beim Aufprall eines Fußgängers oder Radfahrers auf die Frontklappe entstehen, deformiert sich der Anschlagpuffer in vertikaler Richtung plastisch, sodass auch im Bereich des Anschlagpuffers sich die Frontklappe ausreichend deformieren kann, um den Aufprall des Fußgängers oder Radfahrers auf biomechanisch verträgliche Weise zu verzögern. Der Anschlagpuffer absorbiert während der plastischen Deformation Energie.

Aufgabe der Erfindung ist es, einen Anschlagpuffer für eine Frontklappe zu schaffen, der eine ausreichende Deformation der Frontklappe bei einem Aufprall eines Fußgängers oder Radfahrers auch im Bereich des Anschlagpuffers gewährleistet.

Diese Aufgabe wird mit einem Anschlagpuffer für eine Frontklappe eines Kraftfahrzeugs mit den Merkmalen des Patentanspruchs 1 gelöst.

Erfindungsgemäß weist ein Anschlagpuffer für eine Frontklappe eines Kraftfahrzeugs zumindest ein Pufferelement und eine Aufnahme auf, über die das Pufferelement entweder an der Frontklappe oder an einem der geschlossenen Frontklappe gegenüberliegenden Abschnitt der Karosserie des Kraftfahrzeugs anbringbar ist.

Die Aufnahme ist so gestaltet, dass sie bei Belastungen des Pufferelements, die größer einer Grenzlast sind, zumindest teilweise zerbricht, sodass sich das Pufferelement relativ zur Frontklappe oder zum der geschlossenen Frontklappe gegenüberliegenden Abschnitt der Karosserie verlagern kann und nicht mehr als Anschlag für die geschlossene Frontklappe dient.

Ein derartiger Anschlagpuffer erfüllt voll die Funktion eines konventionellen Anschlagpuffers als Anschlag für die Frontklappe in der geschlossenen Stellung. Dennoch behindert der Anschlagpuffer nicht die erforderliche Nachgiebigkeit der Frontklappe beim Aufprall eines Fußgängers oder Radfahrers. Durch die in diesem Fall sehr hohe Belastung oberhalb der Grenzlast des Pufferelements zerbricht die Aufnahme, sodass das Pufferelement anschließend mit geringer Kraft ausweichen kann, und so keinen unerwünschten Anschlag mehr für die Frontklappe darstellt.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1a: ein Diagramm über den Kraftverlauf eines aus dem Stand der Technik bekannten Anschlagpuffers bei zunehmendem Deformationsweg,
- Fig. 1b: ein Diagramm über den Kraftverlauf eines erfindungsgemäßen Anschlagpuffers bei zunehmendem Deformationsweg,
- Fig. 2a: eine perspektivische Darstellung eines erfindungsgemäßen Anschlagpuffers,
- Fig. 2b: einen Schnitt durch den in Fig. 2a gezeigten Anschlagpuffer und
- Fig. 3: eine perspektivische Darstellung einer alternativen Ausführung eines erfindungsgemäßen Anschlagpuffers.

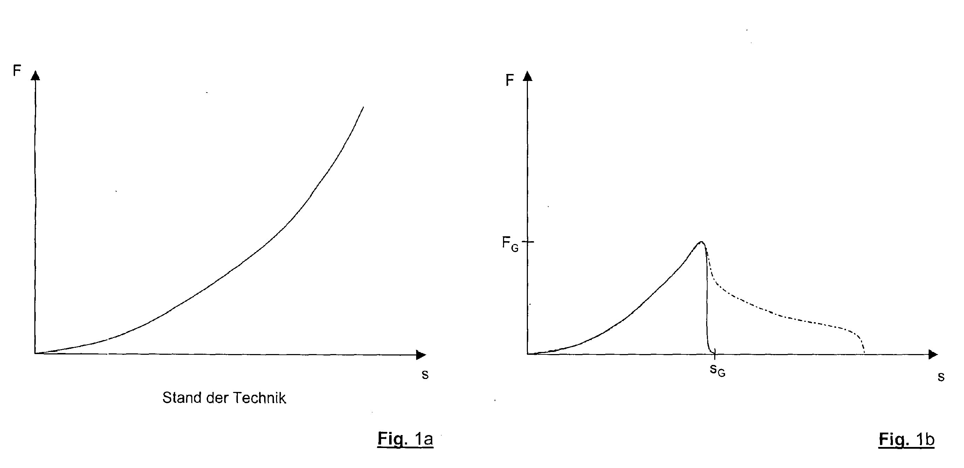

In Fig. 1a ist die Kennlinie eines konventionellen Anschlagpuffers einer Frontklappe eines Kraftfahrzeugs dargestellt. Der Anschlagpuffer dient als Anschlag für die geschlossene Frontklappe. Er soll ein gleichmäßiges Fugenbild zwischen der Frontklappe und der angrenzenden Karosserie sicherstellen, und ein Aufschlagen der Frontklappe auf die darunter liegenden Karosseriebauteile beim Schließen der Frontklappe verhindern. Dazu weist der Anschlagpuffer ein elastisches Pufferelement auf, das beispielsweise aus Gummi besteht. In dem gezeigten Diagramm ist nach oben die Kraft F aufgetragen, die zur elastischen Verformung des Pufferelements benötigt wird. Der Verformungsweg s ist nach rechts aufgetragen. Dabei ist gut zu erkennen, dass die Kraft F exponentiell über den Verformungsweg s zunimmt.

Fig. 1b zeigt demgegenüber die für einen Fußgängeraufprallschutz erforderliche Kennlinie eines Anschlagpuffers. Bis zu einem Grenzverformungsweg S_{G} steigt die Kraft F analog zur Kennlinie des konventionellen Anschlagpuffers exponentiell bis zu einer Grenzkraft F_{G}. Diese Grenzkraft F_{G} ist größer als die Kräfte, die beim normalen Schließen der Frontklappe auf das Pufferelement wirken. Bei einem Verformungsweg s, der über den Grenzverformungsweg S_{G} hinausgeht, sinkt die dafür benötigte Kraft schlagartig ab.

Beim Aufprall eines Fußgängers oder Radfahrers auf die Frontklappe des Kraftfahrzeugs muss diese nachgeben können, um den Aufprall auf biomechanisch verträgliche Weise verzögern zu können. Dazu weisen alle unter der Frontklappe angeordneten Aggregate einen Mindestabstand zur geschlossenen Frontklappe auf, der als Deformationsweg zur Verfügung steht. Allerdings liegt die geschlossene Frontklappe auf mehreren Anschlagpuffern auf. Nur Anschlagpuffer, die eine Kennlinie ähnlich der in Fig. 1b gezeigten Kennlinie aufweisen, ermöglichen eine ausreichende Deformation der Frontklappe auch im Bereich der Anschlagpuffer. Einerseits erfüllen derartige Anschlagpuffer voll die Funktionalität eines konventionellen Anschlagpuffers, da beim Schließen der Frontklappe die auf das Pufferelement wirkenden Kräfte üblicherweise deutlich unter der Grenzkraft F_{G} liegen. Andererseits behindern sie die erforderliche Deformation der Frontklappe im Falle eines Aufpralls eines Fußgängers oder Radfahrers kaum. Denn die beim Aufprall eines Fußgängers oder Radfahrers herrschenden Kräfte sind deutlich größer als die Grenzkraft F_{G}. Nach dem Überschreiten der Grenzkraft F_{G} steigt die Kraft für einen weiteren Deformationsweg s des Pufferelements aber nicht mehr weiter an, sonder sinkt schlagartig ab.

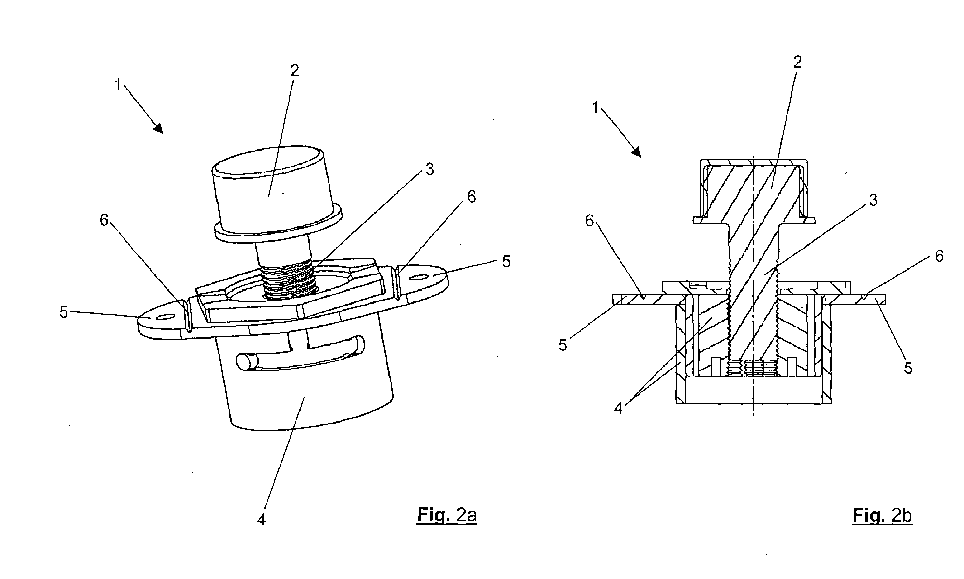

Ein Anschlagpuffer mit einer Kennlinie ähnlich der in Fig. 1b dargestellten Kennlinie ist in den Fig. 2a und 2b dargestellt. Dieser Anschlagpuffer 1 weist ein zylindrisches Pufferelement 2 mit einem Schraubenschaft 3 auf, mit dem es in eine Aufnahme 4 eingeschraubt ist. Über die Einschraubtiefe des Pufferelements 2 kann die Höhe des Anschlags eingestellt werden. Die Aufnahme 4 ist in eine Ausnehmung eines nicht dargestellten Blechs eines Kotflügels eingesetzt. Sie ragt durch die Ausnehmung hindurch und liegt nur mit zwei Befestigungslaschen 5 auf dem Rand der Ausnehmung auf und ist dort mit dem Blech des Kotflügels verbunden. Die Befestigungslaschen 5 weisen im Anbindungsbereich an die restliche Aufnahme 4 jeweils eine Kerbe 6 auf, die als Sollbruchstelle dient.

Beim normalen Schließen der Frontklappe schlägt diese auf das Pufferelement 2 auf. Die Kräfte, die dabei wirken, sind so gering, dass die Befestigungslaschen 5 der Aufnahme nicht entlang der Kerben 6 zerbrechen, sondern die Kräfte in den Kotflügel einleiten. Wenn dagegen ein Fußgänger oder Radfahrer auf die Frontklappe aufprallt, sind die Kräfte so groß, dass die Befestigungslaschen 5 entlang der Kerben 6 zerbrechen. Nachdem die Kräfte die zum Zerbrechen der Befestigungslaschen 5 erforderliche Grenzkraft F_{G} überschritten haben, sind nur mehr geringe Kräfte erforderlich, um den Anschlagpuffer nach unten weg zu verlagern.

So dient der Anschlagpuffer 1 einerseits beim normalen Schließen der Frontklappe als konventioneller Anschlagpuffer, andererseits stellt er keinen harten Anschlag für die Frontklappe im Falle eines Aufpralls eines Fußgängers oder Radfahrers dar.

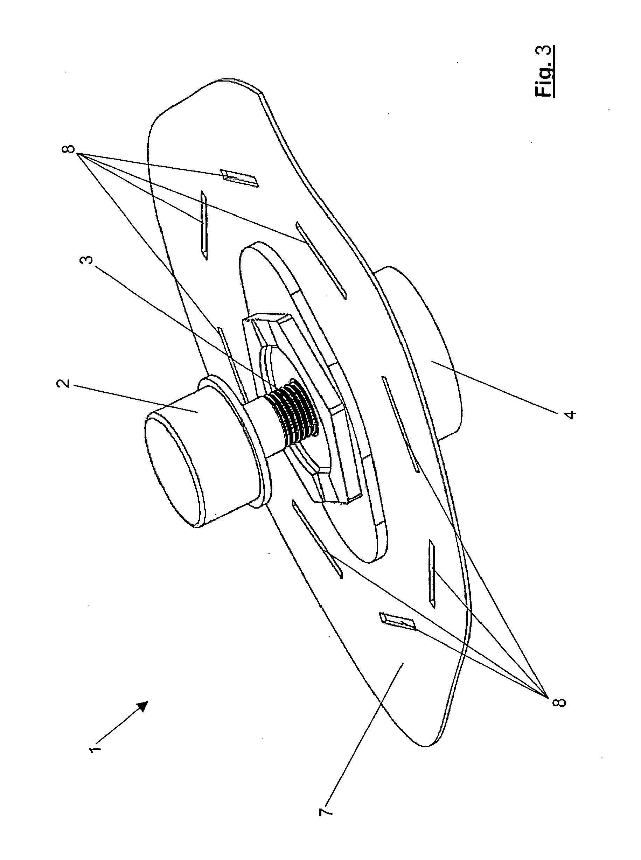

In Fig. 3 ist eine alternative Ausführung eines Anschlagpuffers 1 dargestellt. Anstelle der Befestigungslaschen weist dieser Anschlagpuffer 1 einen umlaufenden Befestigungsflansch 7 auf, mit dem er mit dem Rand der Ausnehmung verbunden ist. Der Befestigungsflansch 7 weist umlaufend im an die restliche Aufnahme 4 angrenzenden Bereich Perforierungen in Form von mehreren kleinen Schlitzen 8 auf, die analog zu den Kerben 6 als Sollbruchstelle dienen. Die Schlitze 8 sind so dimensioniert, dass der Anschtagpuffer 1 bei Kräften, wie sie beim normalen Schließen der Frontklappe vorkommen, nicht zerbrechen, sondern die Kräfte in den Kotflügel einleiten.

Bei Kräften, wie sie im Falle eines Aufpralls eines Fußgängers oder Radfahrers herrschen, zerbricht dagegen der Befestigungsflansch entlang der Schlitze 8, sodass der Anschlagpuffer 1 sich nach unten verlagern kann.

## Patentansprüche

1. Anschlagpuffer (1) für eine Frontklappe eines Kraftfahrzeugs, mit zumindest einem Pufferelement (2) und einer Aufnahme (4), über die das Pufferelement (2) entweder an der Frontklappe oder an einem der geschlossenen Frontklappe gegenüberliegenden Abschnitt der Karosserie des Kraftfahrzeugs anbringbar ist, wobei die Aufnahme (4) so gestaltet ist, dass sie bei Belastungen des Pufferelements (2), die größer einer Grenzlast (F_{G}) sind, zumindest teilweise zerbricht, sodass sich das Pufferelement (2) relativ zur Frontklappe oder zum der geschlossenen Frontklappe gegenüberliegenden Abschnitt der Karosserie verlagern kann und nicht mehr als Anschlag für die geschlossene Frontklappe dient.

2. Anschlagpuffer (1) nach Anspruch 1, **dadurch gekennzeichnet, dass** die Aufnahme (4) Sollbruchstellen (6, 8) aufweist, an denen die Aufnahme (4) bei Belastungen des Pufferelements (2), die größer als die Grenzlast (F_{G}) sind, gezielt zerbricht.

3. Anschlagpuffer (1) nach Anspruch 2, **dadurch gekennzeichnet, dass** die Sollbruchstellen (6, 8) durch lokale Materialverjüngungen, wie beispielsweise Kerben (6), und / oder durch lokale Materialdurchbrüche, wie beispielsweise Perforierungen (8), erzeugt werden.

4. Anschlagpuffer (1) nach einem der vorhergehenden Ansprüche, **dadurch gekennzeichnet, dass** das Verlagern des Pufferelements (2) nach dem Zerbrechen der Aufnahme (4) wesentlich geringere Kräfte erfordert, als zum Zerbrechen erforderlich waren.

5. Anschlagpuffer (1) nach einem der vorhergehenden Ansprüche, **dadurch gekennzeichnet, dass** die Aufnahme (4) bei einem Aufprall eines Fußgängers oder Radfahrers auf die Frontklappe zerbricht, sodass das Pufferelement (2) keinen Anschlag mehr für die Frontklappe darstellt.

6. Anschlagpuffer nach Anspruch 4, **dadurch gekennzeichnet, dass** die Grenzlast (F_{G}) größer als die üblichen Belastungen des Pufferelements (2) beim Schließen der Frontklappe, aber geringer als die Belastungen des Pufferelements (2) beim Aufprall eines Fußgängers oder Radfahrers auf die Frontklappe ist.
